# EUROPEAN PATENT APPLICATION

(11) **EP 3 502 875 A1**
(43) Date of publication of application: **26.06.2019**
(21) Application number: 17210279.0
(22) Date of filing: 22.12.2017
(51) Int. Cl.: G06F 8/656, G06F 11/27, G06F 11/36

(54) **SEAMLESS AND SAFE UPGRADE OF SOFTWARE INTENSIVE SYSTEMS DURING OPERATION**

(71) Applicant: Siemens Aktiengesellschaft, 80333 München (DE)
(72) Inventor: Fiege, Ludger, 85567 Grafing (DE); Fröhlich, Joachim, 85614 Kirchseeon (DE); Rothbauer, Stefan, 86156 Augsburg (DE); Stückjürgen, Christoph, 80807 München (DE)

(57) **Abstract**

Disclosed are a method and system for upgrading a service or microservice within a system where an updated version of the service is employed in the system without immediately allowing the service from assuming control of the final output of the system.

## Description

Technical and software intensive systems provide services to users (human or other systems) and services need to be updated or upgraded during the lifecycle of the system.

In software development there is a trend to update and upgrade smaller parts of the system, that provide services (also called micro services) in shorter cycles, more frequently.

To the degree that a system consists of more and more separately update-/upgradeable parts the number of upgrades increases.

For each update/upgrade, it has to be verified whether it can be used productively in the field (deployed for production use). The following issues are relevant:
It is difficult to determine whether a newly developed version of a service (update/upgrade) is good enough to be accepted or is better than the current service and should be used instead of the already implemented service. The problem is that laboratory tests may not be able to be executed sufficiently close to real world operating conditions or not for long enough to gain the confidence required.

It is not acceptable or too expensive that critical systems are taken out of operation too often or for too long time periods.

For systems that need to operate safely, any change in the system needs to be validated in the field to ensure safe operation in its intended environment.

After performing an upgrade/update, unforeseen problems might occur in the field and then a reversion to the pre-upgrade state (roll back) is desirable. However, in many cases this may not be not be possible to achieve in a fast and non-complex manner or additional downtime of the system may be involved.

Previously the above stated problems have been solved by the following approaches:
The first approach is to take the system out of service for the period which is required to upgrade it. This approach leads to unavailability of the system during the upgrade period.
A second approach is to rely on a secondary system to provide the service for the upgrade period. This approach is expensive, as a secondary system must be provided and maintained that is only used during the upgrade periods and is otherwise not used. If the secondary system is used in parallel during normal operation for increasing system availability, then no redundant system is available during an upgrade.
A third approach relates to safety relevant systems. For safety relevant systems the validation and verification aspects usually are taken care of by extensive testing in a development (laboratory / simulation) environment and by performing change impact analyses to gain confidence that the system will still provide its services safely after the upgrade. However, this approach does not always provide the confidence of the new service's fitness for its intended purpose, since results of tests in a development environment may not be transferred to the operational environment where factors (use/application scenarios) may be relevant that cannot be simulated in the development environment.

To deal with possible problems after an upgrade/update a further possibility is to implement further down times during which the pre-upgrade state can be rebuild. In case a secondary system has been in use during the upgrade, this has the disadvantage that the secondary systems needs to be used for a longer time than previously planned during performance of the roll-back.

### SUMMARY

Disclosed is a computer-implemented method for upgrading at least one service of a plurality of services performed on a technical system (200), the technical system (200) comprising at least one actuator (210), wherein the plurality of services is adapted to provide an output (209) which controls the at least one actuator (210) in response to an input (202) to the system (200), wherein the computer-implemented method is adapted to
a. deploy at least one updated version of the at least one service (211) on the system (200) while maintaining the previous version of the service (204) on the system (200), wherein the updated version of the at least one service (211) is prevented from controlling the at least one actuator (210) and deploy a test probe module (311b, 602) for testing the performance of the at least one updated version of the at least one service (211) on the technical system (200),
b. operate the test probe module (311b, 602) on the technical system (200) to test the performance of the at least one updated version of the at least one service (211) on the technical system (200) with respect to predetermined criteria,
c. determine that the performance of the at least one updated version of the at least one service (211) complies with predetermined criteria,
d. disable the control of the previous service (204) for the at least one actuator (210), and
e. enable the control of the deployed updated version (212) for the at least one actuator (210).

The method has the advantage that a updated version of a service can be tested in the field while preventing that the updated version will have any influence on the physical world.

It is also disclosed that the previous version of the service (204) is maintained in the technical system (200) as a fallback.

This has the advantage that after enabling the updated version of the service and encountering any issues with the updated version of the service at a later time point the system can be easily rolled back to the previous version of the service.

It is also disclosed that step d further comprises to determine whether performing steps e and f is in accordance with operation limits of the technical system (200).

Thus, the method has the advantage that the method also allows to identify the best time point between switching from the first version of the service to the second updated version of the service, thereby minimizing, for example, down-times of the system.

It is disclosed that determining whether performing steps e and f is in accordance with operation limits of the technical system (200) comprises determining a predetermined time limit of system (200) downtime, an acceptable impact on availability, or/and an acceptable risk of failure.

This step has the advantage that particular criteria can be used to optimize the time of switch.
Disclosed is also that at least two updated versions of the service are employed, and in step d) is determined which of the at least two versions complies best with the predetermined criteria and in step f) enabling the control of the outputs of the deployed updated version of the at least two deployed updated versions which complies best with the predetermined criteria.

Thus, the method has the further advantage that several version of an updated service can be tested in the field in parallel.

Disclosed is also that the method comprises disabling control of the at least one actuator (210) by the deployed at least one updated version of the service and enabling control of the at least one actuator (210) by the previous version of the service, when a second set of predetermined criteria are not complied with by the deployed at least one updated version of the service.

Thus, the method also allows to quickly switch back to a previous version of the service when it was determined that the updated version of the service has not worked accurately in the field.

Disclosed is also to remove the previous version of the service from the technical system (200), when a second set of predetermined criteria are complied with by the deployed at least one updated version of the service.

In this way, the system the capacities of the system may be used more efficiently.

Disclosed is also that the second set of criteria relate to the performance of the system (200) when being controlled by the deployed updated version of the service program.
This allows to specify specific criteria for the system after enabling the second version of the service.

It is also disclosed that the test probe module (311b, 602) can provide and/or manipulate input data, receive data from a sensor proxy, a control logic and an actuator (210) proxy module of the service.

These features specify advantageous configuration of the test probe module.

Disclosed is also a data carrier containing instructions to perform the method as defined above when operated on a computer system (200).

Disclose is also a computer implemented system (200) comprising a processor for performing a plurality of services, wherein the services process input data to output data, the output data controlling the action of at least one actuator (210), wherein each of the services is configured to comprise
a. a sensor proxy module (601) for receiving input data;
b. a control logic module (603) for processing the input data to output data;
c. an actuator proxy module (604) for outputting the data to control the at least one actuator (210);
d. a test probe module (311b, 602) being operatively connected to data sensors (705) and the data sensors (705) providing data from the sensor proxy module (601), control logic module (603), and actuator proxy module (604) to the test probe module (311b, 602), the test probe module (311b, 602) configured to manipulate, check, and monitor the data of the sensor proxy module (601), control logic module (603), actuator proxy module 604);
e. an authority determination module (1006) for determining the performance level of a first service and configured to receive input provided by the test probe module (311b, 602) and provided by the authority determination module of a second service of the system (200), the second service being a different version of the first service;
f. a primary activator module (1007) for calculating a time point for a handover from the first to the second service and for activating the second service and operatively connected to the authority determination module and the test probe module (311b, 602) and configured to receive input from the primary activator module (1007a) of the second version of the service of the system (200).

This disclosure provides the details of the system on which the advantageous method defined above can be implemented.

Disclosed is also that the first version of the service the sensor proxy module (601), the control logic module (603), and the actuator proxy module (604) are functionally connected with each other.

This disclosure specifies the configuration of the first version of the service.

Disclosed is also the second version of the service the sensor proxy module (701) and the control logic module (703) are functionally connected with each other, and the control logic module (703) and the actuator proxy module (704) are not functionally connected with each other.

This disclosure specifies the configuration of the second version of the service.

It is further disclosed that the test probe module (311b, 602) comprises a data commander module (803), a probe data module (804), a data area (805), and a service data module (806) .

This disclosure defines how an advantageous test probe module is configured.

### BRIEF DESCRIPTION OF FIGURES

- Figure 1: illustrates a system providing services before system upgrade.
- Figure 2: illustrates a system where an upgraded service has been implemented in the system, but the outputs of the updated version of the service are prevented from controlling the action of the actuators.
- Figure 3: illustrates that the updated service also contains a test program.
- Figure 4: illustrates a systems where the control of the outputs of the previous service for the at least one actuator has been disabled, while the control of the outputs of the up-dated service for the at least one actuator has been enabled.
- Figure 5: illustrates a system where the previous service has been removed from the system.
- Figures 6 and 7: illustrate the interaction points of a test probe built into a service with the service.
- Figure 8: illustrates how tests built into the service control the test probe.
- Figure 9: illustrates how authority determination negotiates control function.
- Figure 10: illustrates how a primary activator performs seamless handover between services.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms ""connected" and "coupled" are used broadly and encompass both direct and indirect connecting and coupling. Also, electronic communications and notifications may be performed using any known means including wired connections, wireless connections, etc.

It should also be noted that a plurality of hardware and software based devices, as well as a plurality of different structural components may be utilized to implement the invention. In addition, it should be understood that embodiments of the invention may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software (e.g., stored on non-transitory computer- readable medium) executable by one or more processors. As such, it should be noted that a plurality of hardware and software based devices, as well as a plurality of different structural components may be utilized to implement the invention. For example, "control units" and "controllers" described in the specification can include one or more processors, one or more memory modules including non-transitory computer-readable medium, one or more input/output interfaces, and various connections (e.g., a system bus) connecting the components.

An application or application program can be structured into services, also called microservices and herein exchangeably used for the term services, and thus the services can be considered to form modules within an application program. Services are independently deployable and easy to replace due to their modular character. Usually, services are fine-grained and their protocols light weight.

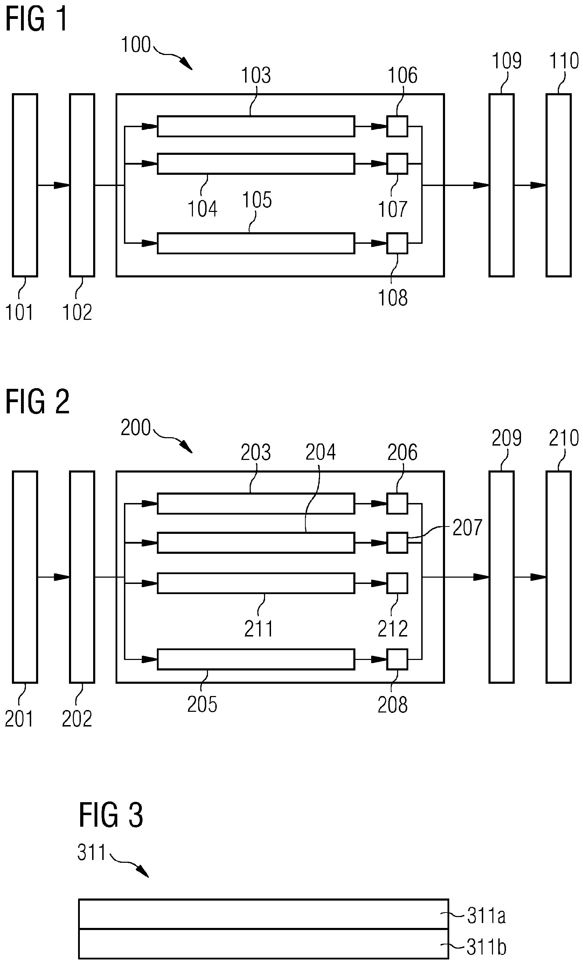

Figure 1 shows a system 100 (e.g. a control system) that receives input 102 (e.g. values of parameters received from sensors) which may be outputted by devices like sensors 101 or other systems providing an output. The system 100 processes this input 102 via the services 103, 104, 105 (aka microservices) being performed on the system 100. Each of the services 103, 104, 105 has a modular structure and performs an individual task and provides respective outputs 106, 107, 108 contributing to the common output 109 of the system 100. The services 103, 104, 105 may also provide the common output 109 directly. The output 109 can serve to control an actuator 110 or the output 109 may be used by another system as input.

Figure 2 shows the system 200 after the employment of an updated version of a service 211 for the service 204. At this stage of the disclosed method, the output 212 of the updated version of the service 211 is prevented from controlling or influencing the action of the actuator, but does already receive the input 202 that the other services 203, 204, 205 of the system 200 receive. A first version (previous version) and a second version (updated version) of a service essentially perform the same function within a system, but contain modifications of the service that may affect their efficiency within the system.

Figure 3 shows that the updated service 311a (211 in Figure 2) is provided with a test probe module 311b which form a unit 311. The functioning of the test probe module 311b is explained in greater detail below. The test probe module 311b is capable of monitoring how the data is processed by the service 311b and thus is provided with data sensors for various modules of the service 311b (e.g. data sensors for a sensor proxy, control logic, and actuator proxy module). The test probe module 311b can also manipulate the data inputted into service 311b by injecting faults into the service 311b and monitor how this manipulated data is processed by the service 311b. Accordingly, this approach has the advantage that a test can be performed in the field free of side-effects with respect to non-updated service 204 and other services running on the entire system.

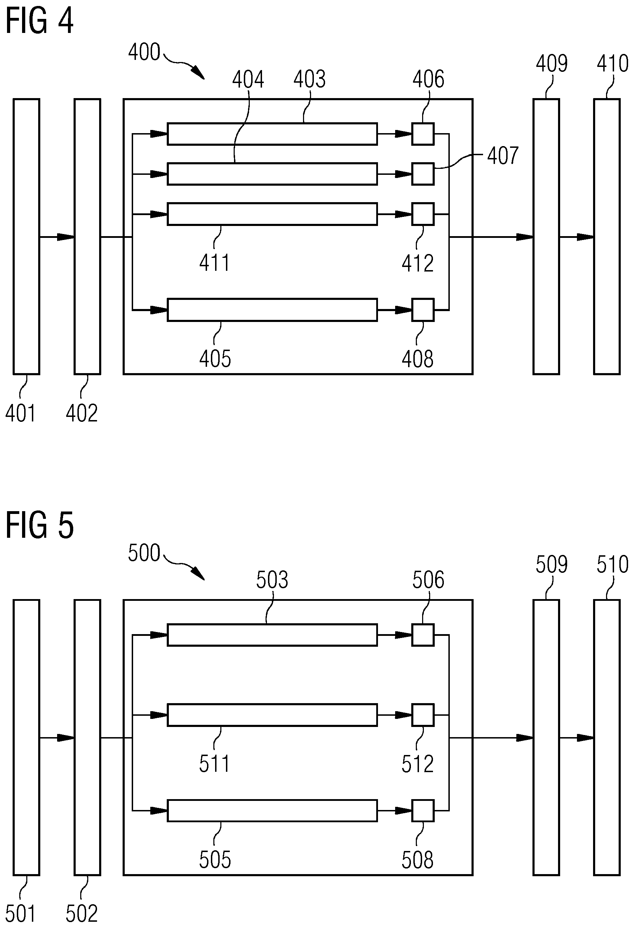

As it is illustrated in figure 4, after it was determined that the updated service 211, 311a, 411 successfully passes the test, the previous version of the service 404 can be disabled from contributing to the common output 409 and thus the control of the outputs 409 of the previous service for the at least one actuator is disabled. At the same time the updated service 211, 311a, 411 can be enabled to contribute to the common output 409, e.g. via functionally coupling the individual output 412 to the common output 9. Thus, the switch between the previous version of the service 404 and the updated version of the service 411 is performed seamlessly.

Before performing this switch it can be determined whether the time point of the switch would be in accordance with operation limits of the technical system and thus a particular suitable time point is determined for performing the switch. Operation limits of the technical system may be determined based on a predetermined time limit of system downtime, an acceptable impact on availability, or/and an acceptable risk of failure.

If it is determined that the updated service 211, 311a, 411 does not successfully pass the test further testing may be performed or/and the updated service 211, 311a, 411 may be removed (not shown).

Provided that the updated service 211, 311a, 411 can be enabled as illustrated in figure 4 the test program may further monitor the actions of the enabled updated service 211, 311a, 411 or further monitoring actions can be used to monitor the actions of the enabled updated service 211, 311a, 411.

If sufficient confidence into the enabled updated service 211, 311a, 411, 511 is established the previous version of the service can be removed from the system as illustrated in figure 5.

However, if further tests show that the enabled updated service 211, 311a, 411, 511 does not meet the preset requirements a seamless rollback can be performed, i.e. the previous version of the service can be again enabled and the updated version is disabled which would result in the same configuration of the system 200 as illustrated in figure 2. Subsequently, the updated version of the service may be submitted to further testing or may be removed.

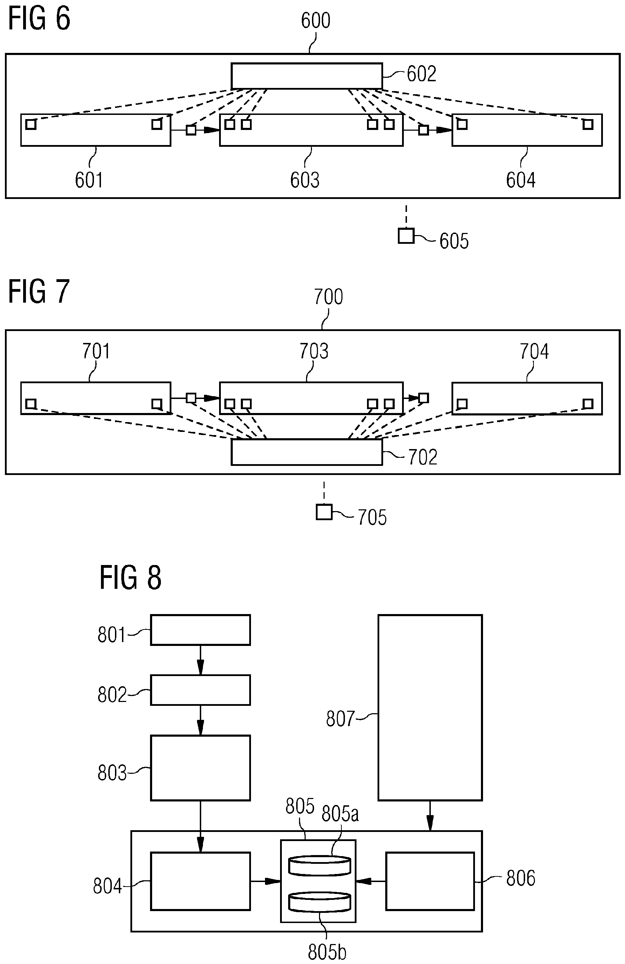

Figures 6 and 7 illustrate a test probe 602, 603 according to the present disclosure and useful for performing the above described method. The configurations of figures 6 and 7 differ in that figure 6 relates to a previous version of the service 600 and figure 7 relates to an updated version of the service 700. Service 600 comprises a sensor proxy module 601, a control logic module 603, and an actuator proxy module 604. Service 700 comprises a sensor proxy module 701, a control logic module 703, and an actuator proxy module 704. As can be seen in figure 7 the output provided by the control logic module 703 is not operatively connected to the actuator proxy module 704 which is different in the configuration for the previous version of the service 600 where the control logic module 603 is operatively connected to the actuator proxy 604. Thus, the updated version of the service 700 in this configuration will not have any impacts in the physical world or contribute to the common output of the services of the system. The test probe can be built into any service. The test probe 602, 702 has data sensors 605/705 which can be functionally connected to the sensor proxies 601, 701, the control logic 603, 703, and the actuator proxy 604, 704. The data sensors 605, 705 provide data provided by the service, which is, for example, encapsulated service data. The test probes 602, 702 can be programmable before and during run-time of the respective service, can monitor, manipulate, and check the service data (e.g. encapsulated service data), and work with fixed resources of the service resources (e.g. execution time, memory, or/and bandwidth).

Figure 8 illustrates how tests built into the service, control the test probe and the components of the test probe and its collaborators. A test (program) 801 intern to the service is translated by a test interpreter 802 into a sequence of data monitor and manipulate commands for instructing a data commander 803. The test interpreter 802 also asserts the properties of the monitored data. The data commander 804 installs or uninstalls monitor and manipulate commands, checks their trigger conditions, triggers commands, and delivers the monitored data to the test interpreter 802. A probe data module 804 reads and writes inputs, outputs and internals provided by the data commander 802 and unnoticed by the service. In a data area 805 the data read and written by the Probe Data module data 804 is saved. The data area 805 contains unchanged data in one area (designated as original cells 805b) and the data manipulated by the test probe in a further area (designated as overlay cells 805a). A service data module reads and writes the service data (e.g. inputs, outputs, and/or internals) without noticing whether the test probe manipulated or monitors the data obtained by the service logic 807.

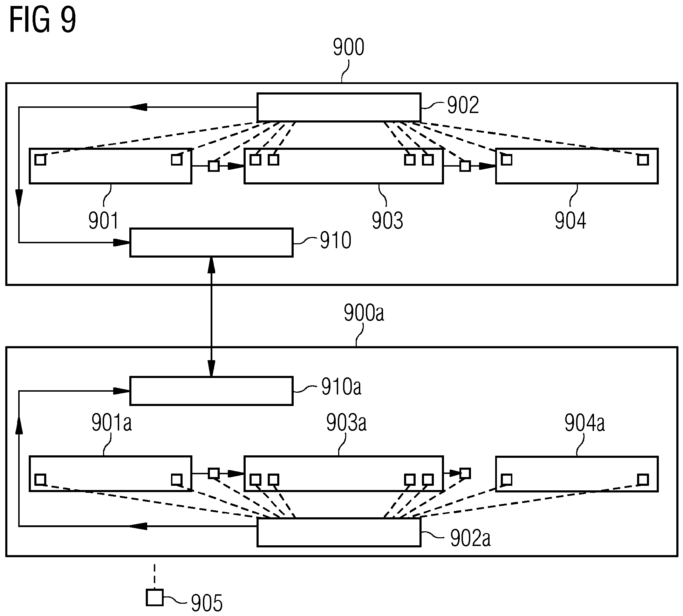

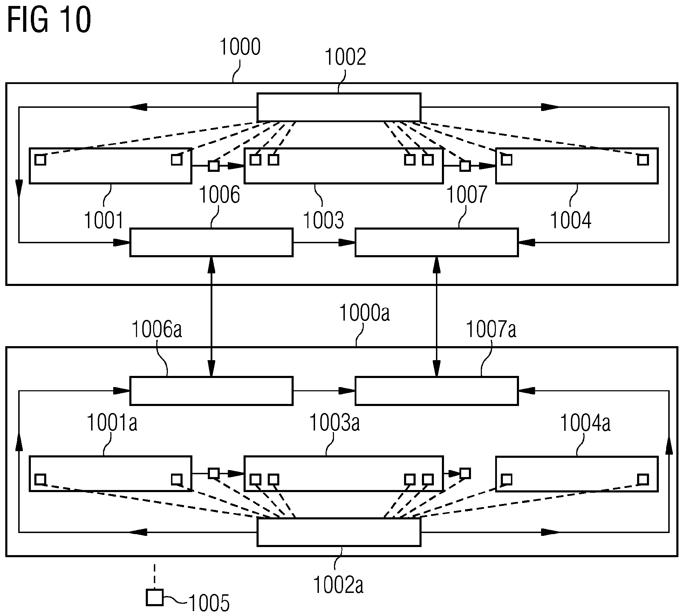

Figures 9 and 10 illustrate how an authority determination module within the services negotiates which service has the primary control (function) and show further details of the services illustrated in figures 6 and 7.

Previous and updated service (and thus each service considered in the present disclosure) may comprise a test probe 902, 902a, a sensor proxy module 901, 901a, an actuator proxy module 904, 904a, and an authority determination module 910, 910a.

Via the sensor proxy module 901, 901a data is forwarded and processed by the control logic module 903, 903a and forwarded to the actuator proxy module 904, 904a where the last step is omitted in the case of the updated service that has not yet been enabled to control the actuator or/and contribute to the common output of the services of the system. The test probe module 902, 902a is functional connected to data sensors 905 which can be functionally connected to the sensor proxy modules 901, 901a, the control logic module 903, 903a, and the actuator proxy module 904, 904a. The data sensors 905 provide data provided by the service, which is, for example, encapsulated service data.

The authority determination module 910, 910a calculates a performance level for the respective service of the respective version (i.e. for the version number) based on a verdict and/or the data obtained from the test probe module. The authority determination module 910 of the one version of the service negotiates the primary role with the peer authority determination module 910a of the other version of the service. Therefore, the peer authority determination modules 910/910a can compare the performance of the peer services and make a determination based on this comparison which service should be the primary, i.e. be enabled, e.g. to control the at least one actuator.

To achieve a seamless handover between the services the services can also contain a primary activator module 1007, 1007a as illustrated in figure 10. The services illustrated in figure 10 contain the same modules as the services described with reference to figure 9 and having the same functions, but in addition contain a primary activator module 1007, 1007a.

The primary activator module 1007, 1007a monitors and receives data using the test probe 1002, 1002a and the primary activator module 1007 of one version of the service 1000 (previous version) exchanges data with the peer primary activator module 1007a of the other version of the service 1000a (updated version or vice versa). The primary activator module 1007, 1007a also receives information from the authority determination module 1006, 1006a which version of the service should take over the authority. The primary activator module 1007, 1007a calculates a point in time for the handover from service 1000 to service 1000a based on the data provided from the modules of its own service and the data provided from the modules of the peer service. At the calculated point in time it activates the presently disabled service as the new primary service and puts the current primary service into a (hot) standby mode.

It should be understood that the above-described configuration of the services may apply to any version of the services and thus depending for example on a new programmed test program a switch from an updated version of a service to a previous version of the service may also be achieved using the above described configurations of the services.

## Claims

1. Computer-implemented method for upgrading at least one service of a plurality of services performed on a technical system (200), the technical system (200) comprising at least one actuator (210), wherein the plurality of services is adapted to provide an output (209) which controls the at least one actuator (210) in response to an input (202) to the system (200), wherein the computer-implemented method is adapted to
a. deploy at least one updated version of the at least one service (211) on the system (200) while maintaining the previous version of the service (204) on the system (200), wherein the updated version of the at least one service (211) is prevented from controlling the at least one actuator (210) and deploy a test probe module (311b, 602) for testing the performance of the at least one updated version of the at least one service (211) on the technical system (200),
b. operate the test probe module (311b, 602) on the technical system (200) to test the performance of the at least one updated version of the at least one service (211) on the technical system (200) with respect to predetermined criteria,
c. determine that the performance of the at least one updated version of the at least one service (211) complies with predetermined criteria,
d. disable the control of the previous service (204) for the at least one actuator (210), and
e. enable the control of the deployed updated version (212) for the at least one actuator (210).

2. Computer-implemented method according to claim 1, wherein the previous service (204) is maintained in the technical system (200) as a fallback.

3. Computer-implemented method according to any of the preceding claims wherein step d further comprises to determine whether performing steps e and f is in accordance with operation limits of the technical system (200).

4. Computer-implemented method according to claim 3, wherein determining whether performing steps e and f is in accordance with operation limits of the technical system (200) comprises determining a predetermined time limit of system (200) downtime, an acceptable impact on availability, or/and an acceptable risk of failure.

5. Computer-implemented method according to claim 4, wherein a point in time for performing steps e and f is determined based on the determination of claims 3 and 4.

6. Computer-implemented method according to any of the preceding claims wherein at least two updated versions of the service are employed, and in step d) is determined which of the at least two versions complies best with the predetermined criteria and in step f) enabling the control of the outputs of the deployed updated version of the at least two deployed updated versions which complies best with the predetermined criteria.

7. Computer-implemented method according to any of the preceding claims, further comprising disabling control of the at least one actuator (210) by the deployed at least one updated version of the service and enabling control of the at least one actuator (210) by the previous version of the service, when a second set of predetermined criteria are not complied with by the deployed at least one updated version of the service.

8. Computer-implemented method according to any of claims 1-7, further comprising removing the previous version of the service from the technical system (200), when a second set of predetermined criteria are complied with by the deployed at least one updated version of the service.

9. Computer-implemented method according to claim 7, wherein the second set of criteria relate to the performance of the system (200) when being controlled by the deployed updated version of the service program.

10. Computer-implemented method according to any of the preceding claims, wherein the test probe module (311b, 602) can provide and/or manipulate input data, receive data from an sensor proxy, a control logic and an actuator (210) proxy module of the service.

11. Data carrier containing instructions to perform the method as defined in any of claims 1-10 when operated on a computer system (200).

12. Computer implemented system (200) comprising a processor for performing a plurality of services, wherein the services process input data to output data, the output data controlling the action of at least one actuator (210), wherein each of the services is configured to comprise
a. a sensor proxy module (601) for receiving input data;
b. a control logic module (603) for processing the input data to output data;
c. an actuator proxy module (604) for outputting the data to control the at least one actuator (210);
d. a test probe module (311b, 602) being operatively connected to data sensors (705) and the data sensors (705) providing data from the sensor proxy module (601), control logic module (603), and actuator proxy module (604) to the test probe module (311b, 602), the test probe module (311b, 602) configured to manipulate, check, and monitor the data of the sensor proxy module (601), control logic module (603), actuator proxy module 604);
e. an authority determination module (1006) for determining the performance level of a first service and configured to receive input provided by the test probe module (311b, 602) and provided by the authority determination module of a second service of the system (200), the second service being a different version of the first service;
f. a primary activator module (1007) for calculating a time point for a handover from the first to the second service and for activating the second service and operatively connected to the authority determination module and the test probe module (311b, 602) and configured to receive input from the primary activator module (1007a) of the second version of the service of the system (200).

13. The computer implemented system (200) of claim 13,
wherein in the first version of the service the sensor proxy module (601), the control logic module (603), and the actuator proxy module (604) are functionally connected with each other.

14. The computer implemented system (200) of claims 12 or 13, wherein in the second version of the service the sensor proxy module (701) and the control logic module (703) are functionally connected with each other, and the control logic module (703) and the actuator proxy module (704) are not functionally connected with each other.

15. The computer implemented system (200) of any of claims 12-14, wherein the test probe module (311b, 602) comprises a data commander module (803), a probe data module (804), a data area (805), and a service data module (806) .

16. The computer implemented system (200) of claims 12-15, configured to perform the method as defined in claims 1-10.
